# EUROPÄISCHE PATENTSCHRIFT

(11) **EP 1 019 767 B1**
(45) Veröffentlichungstag und Bekanntmachung des Hinweises auf die Patenterteilung: **23.04.2003**
(21) Anmeldenummer: 98958165.7
(22) Anmeldetag: 23.09.1998
(51) Int. Cl.: G02B 6/44

(54) **OPTISCHES KABEL**
OPTICAL CABLE
CABLE OPTIQUE

(30) Priorität: 29.09.1997 DE 19742941
(43) Veröffentlichungstag der Anmeldung: 19.07.2000
(73) Patentinhaber: SIEMENS AKTIENGESELLSCHAFT, 80333 München (DE)
(72) Erfinder: OPEL, Ernst, D-96486 Lautertal (DE); SCHMIDT, Ilona, D-96472 Rödental (DE)
(74) Vertreter: Epping, Wilhelm, Dipl.-Ing.
(86) Internationale Anmeldenummer: DE9802842
(87) Internationale Veröffentlichungsnummer: WO99017144

(56) Entgegenhaltungen:
- EP-A- 0 703 480
- DE-A- 3 914 367
- US-A- 4 770 489
- US-A- 5 098 177
- PATENT ABSTRACTS OF JAPAN vol. 006, no. 203 (P-148), 14. Oktober 1982 & JP 57 109906 A (NIPPON DENSHIN DENWA KOSHA;OTHERS: 01), 8. Juli 1982
- PATENT ABSTRACTS OF JAPAN vol. 010, no. 135 (P-457), 20. Mai 1986 & JP 60 257414 A (NIPPON DENSHIN DENWA KOSHA), 19. Dezember 1985
- MAHLKE UND GÖSSING: "Fiber Optics Cable", 1987, JOHN WILEY, CHICHESTER

## Beschreibung

Die Erfindung betrifft ein optisches Kabel nach dem Oberbegriff des Anspruchs 1.

Es ist bekannt, daß Lichtwellenleiterelemente unterschiedliche thermische Ausdehnungskoeffizienten aufweisen als die übrigen Elemente des Kabels, also insbesondere der Kabelmantel, Aderhüllenmaterialien, etwaige zug- und/oder stauchfeste Elemente usw. Wenn die Lichtwellenleiter lose in einer Kammer untergebracht sind, dann werden sie nur über Reibung an das eigentliche Kabel angekoppelt und infolge der unterschiedlichen thermischen Ausdehnungskoeffizienten des eigentlichen Kabels gegenüber dem Lichtwellenleiterelement kann es zu Makrokrümmungen kommen, welche für das Lichtwellenleiterelement eine Dämpfungserhöhung zur Folge haben. Es ist deshalb üblich, die Abmessungen der die Lichtwellenleiterelemente aufnehmenden Kammer so reichlich zu dimensionieren, daß Dämpfungserhöhungen durch Makrokrümmungen vermieden werden. Diese sehr pauschale Methode hat den Nachteil, daß der Kabelquerschnitt sich erheblich vergrößert, weil bei den bisher bekannten Kabeln stets mit einer Art "Überdimensionierung" gearbeitet wurde. Nähere Einzelheiten über den Kabelaufbau, die Dimensionierung und die Berechnung sind dem Kapitel 9 ("Optical Cable Design" - Seiten 115 bis 158) des Buches "Fiber Optic Cables" von G. Mahlke und P. Gössing (John Wiley & Sons Ltd. dritte ergänzte Auflage 1997) zu entnehmen.

Aus der US-PS 4,770,489 ist es bekannt, Lichtwellenleiter lose in entsprechenden Kammern oder Röhrchen unterzubringen. Weiterhin ist eine Vielzahl von zugfesten Elementen vorgesehen, die einen höheren E-Modul aufweisen als das eigentliche Kabel und zugleich einen niedrigeren thermischen Ausdehnungskoeffizienten. Beispielsweise können hierfür in ein Epoxidharz eingebettete Glas-, Kohlenstoff- oder Aramidgarnfasern verwendet werden. Auf diese Weise kann erreicht werden, daß der Einsatzbereich eines Kabels statt von -20 Grad bis +60 Grad von -20 Grad bis +70 Grad Celsius reicht. Dabei ist davon ausgegangen, daß die Kabelkonstruktion als solche unverändert gelassen wird.

Aus US 5,098,177 ist ein optisches Kabel bekannt, das ein zugfestes Element aufweist, Dabei werden die Lichtwellenleiter lose in Kammern oder Röhrchen untergebracht und weisen eine Beschichtung aus LCP (liquid crystal polymer) auf, dessen linearer Temperaturausdehnungskoeffizient zwischen -15 · 10⁻⁶ bis -5 · 5⁻⁶ (1/K) reicht. Um den unterschiedlichen Ausdehnungen gerecht zu werden, ist ein relativ großer Toleranzbereich (Spiel) zur Wandung von 0,5% vorgesehen. Dies und die Beschichtungsvorgänge stellen einen zusätzlichen Aufwand dar und es vergrößert sich außerdem der Außendurchmesser der Lichtwellenleiter durch die Zusatzbeschichtung, so daß ein Teil dessen, was durch die Einschränkung des Dehnungsverhaltens erreicht wird, durch den vergrößerten Platzbedarf für den Lichtwellenleiter wieder verloren geht.

Der Erfindung liegt die Aufgabe zu Grunde, einen Weg aufzuzeigen wie in einfacher Weise der Raumbedarf für die das oder die optischen Übertragungselemente aufnehmende Kammer innerhalb des optischen Kabels verringert werden kann. Diese Aufgabe wird bei einem Kabel nach dem Oberbegriff des Anspruchs durch die kennzeichnenden Merkmale des Anspruchs 1 gelöst.

Die Erfindung geht somit davon aus, daß im unteren Temperaturbereich, welcher für die Makrokrümmungen besonders kritisch ist, das Ausdehnungsverhalten des Kabels einerseits und das Ausdehnungsverhalten des optischen Übertragungselementes (z.B. in Form eines einzelnen Lichtwellenleiters, eines Lichtwellenleiterbändchens oder einer sonstigen, mechanisch eine Einheit bildenden langgestreckten Lichtwellenleiterstruktur) andererseits so aufeinander abgestimmt ("synchronisiert") werden, daß diese nur um einen vorgegebenen Wert maximal voneinander abweichen. Dadurch ist es möglich, für das optische Übertragungselement ein optimal angepaßtes "Bewegungsfenster" zu schaffen, das für sich genommen bereits möglichst klein ist, jedoch auf jeden Fall noch ausreicht, um infolge unterschiedlicher restlicher, insbesondere lokaler, Längenausdehnungen (z.B. aufgrund von Biegung) sich ergebende Makrokrümmungen aufzunehmen und dadurch Dämpfungserhöhungen zu vermeiden.

Zusätzlich zu der vorstehend geschilderten Lösung oder auch unabhängig hiervon kann gemäß der Erfindung das Lichtwellenleiterkabel auch so ausgelegt werden, daß unterhalb von 20°C, insbesondere beim unteren Temperaturgrenzwert des Kabels (z.B. -30°C), die Abweichung zwischen dem prozentualen Dehnungswert des Temperaturganges des optischen Übertragungselementes einerseits und dem prozentualen Dehnungswert einer zugehörigen Kabelkonstruktion andererseits so gewählt wird, daß die Differenz der Dehnungswerte unter ± 0,03 Prozentpunkte, bevorzugt unter ± 0,02 Prozentpunkte, und insbesondere unter ± 0,01 Prozentpunkte liegt.

Die Kammerabmessungen werden zweckmäßig so gewählt, daß sich aus einer zusätzlichen Überlänge des optischen Übertragungselementes bei dem untersten Temperaturgrenzwert etwa ergebende lokale Biegeradien größer ab 70 mm sind.

Zusätzlich zu der vorstehend geschilderten Lösung oder auch unabhängig hiervon kann auch so verfahren werden, daß das optische Übertragungselement durch mechanisch fest mit ihm verbundene Kunststoffzusätze derart aufgedickt ist (z.B. durch ein weiteres Coating beim Lichtwellenleiter und/oder einen sonstigen Materialauftrag z.B. außen bei Lichtwellenleiterbändchen,) daß bei niedrigen Temperaturen eine, vorzugsweise geringfügige (z.B. max. 0,05%), Anpassung der Dehnung in Bezug auf die Dehnung der Kabelkonstruktion erreicht ist.

Sonstige Weiterbildungen der Erfindung sind in Unteransprüchen wiedergegeben.

Die Erfindung und ihre Weiterbildungen werden anhand von Zeichnungen nachfolgend näher erläutert, in denen Ausführungsbeispiele dargestellt sind.

Es zeigen:
- Figur 1: die relative Dehnung verschiedener Lichtwellenleiterbändchen in Abhängigkeit von der Temperatur,
- Figur 2: in Frontansicht die Lichtwellenleiterbändchen, deren Temperaturgang in Figur 1 dargestellt ist,
- Figur 3: den Temperaturgang verschiedener Kabelkonstruktionen und von Lichtwellenleitern bzw. Lichtwellenleiterbändchen,
- Figur 4: im Querschnitt ein optisches Kabel mit in Kammern untergebrachten Lichtwellenleiterbändchen.
- Figur 5: in Querschnitt ein Kabel mit auf einem Zentralelement aufgeseilten, Lichtwellenleiterbändchen enthaltenden Verseilelementen,
- Figur 6: ein Kabel mit in einem zentralen Rohr angeordneten einzelnen Lichtwellenleitern,
- Figur 7: ein Kabel mit in einem Zentralrohr angeordneten einzelnen Lichtwellenleiterbändchen und
- Figur 8: im Querschnitt ein Kabel mit auf einem Zentralelement aufgeseilten, einzelne Lichtwellenleiter enthaltenden Verseilelementen.

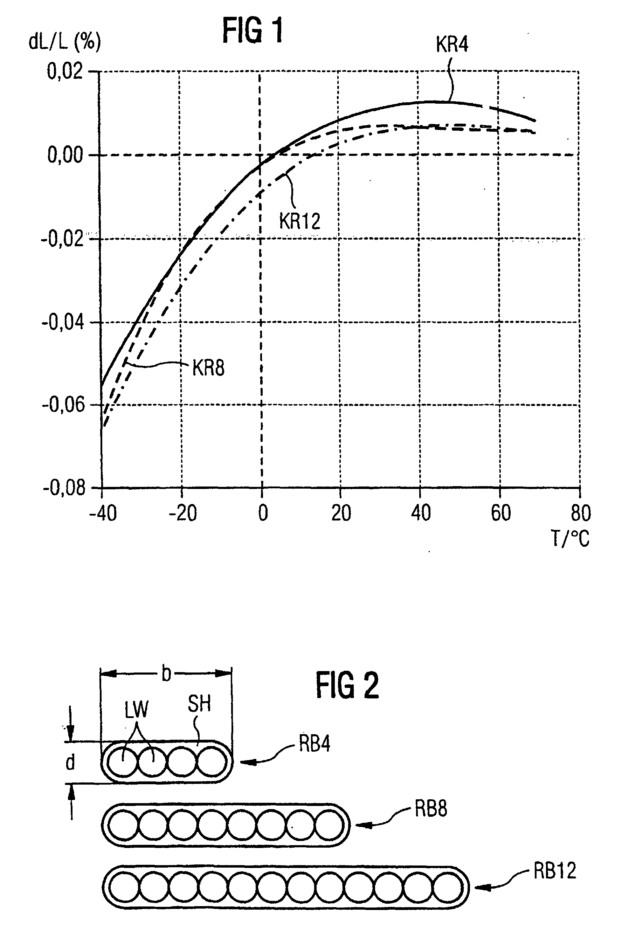

Figur 1 zeigt den Verlauf der Dehnung dL/L (%) in Abhängigkeit von der Temperatur T in °C. Im einzelnen wurden drei verschiedene Lichtwellenleiterbändchen untersucht, die in Figur 2 in Frontansicht dargestellt und mit RB4, RB8 und RB12 bezeichnet sind. Bei dem Bändchen RB4 sind insgesamt vier Lichtwellenleiter LW vorgesehen, bei RB8 insgesamt acht und bei RB12 insgesamt zwölf Lichtwellenleiter. Die Lichtwellenleiter zeigen den üblichen Aufbau, das heißt sie haben einen Kern mit etwa 9 µm Durchmesser (bei Monomodefasern), einen Mantel (Cladding) von 125 µm Außendurchmesser und eine einoder mehrlagige Beschichtung aus Kunststoff (Coating - z.B. aus Acrylharz, Urethanacrylat oder Siliciumacrylat, Epoxy-Acrylat, unpolaren Systemen usw. bestehend) von ca. 250 µm Außendurchmesser. Alternativ können auch Multimodefasern (Kern - Durchmesser = 50 µm/62,5 µm oder 100 µm) oder POF ("plastic optical fibers")-Fasern verwendet werden. Diese Lichtwellenleiter stoßen zweckmäßig mit ihrem Coating unmittelbar aneinander und sind außen mit einer gemeinsamen Schutzhülle SH umgeben, die vorteilhaft aus einem Kunststoffmaterial, z. B. einem Thermoplasten oder einem Acrylat, insbesondere Urethanacrylat besteht. Die Dicke d des so jeweils hergestellten Lichtwellenleiterbändchens beträgt für alle Ausführungsformen der in Figur 2 dargestellten Lichtwellenleiterbändchen etwa 280 - 400 µm, bevorzugt zwischen 310 und 370 µm. Das Bändchen RB4 hatte für die nachstehend beschriebene Messung eine Breite b von 1,1 mm, das Bändchen RB8 von 2,1 mm und das Bändchen RB12 von etwa 3,2 mm. Die Dicke oder Höhe d des Bändchens RB4 betrug 370 µm, die des Bändchens RB8 310 µm und die des Bändchens RB12 ebenfalls 310 µm.

Wie sich aus Figur 1 ergibt, ist der Kurvenverlauf des Temperaturgangs für die Dehnung dL/L für alle drei Bändchen der in Figur 2 dargestellten Art ziemlich ähnlich, wobei der Kurvenverlauf KR4 den dL/L-Wert für das Bändchen RB4, der gestrichelte Kurvenverlauf KR8 den für das Bändchen RB8 und der strichpunktierte Kurvenverlauf KR12 den für das Bändchen RB12 wiedergibt. Insbesondere zeigt sich, daß oberhalb von 20°C die Kurven fast waagrecht verlaufen, das heißt der Temperaturausdehnungskoeffizient im wesentlichen vom Glasteil der Lichtleitfaser bestimmt wird. Erklärbar ist dies dadurch, daß bei den höheren Temperaturen der Einfluß der Schutzhülle SH und/oder des Coatings der Lichtwellenleiter LW wegen der größeren Weichheit der Stoffe nicht mehr so stark in Erscheinung tritt wie bei niedrigeren Temperaturen. Unterhalb von 20° und insbesondere unterhalb von 0° ergibt sich ein sehr starker Temperaturgang für die Dehnung dL/L, was darauf hinweist, daß hier eine starke Wechselbeeinflussung zwischen dem Bändchencoating und Fasercoating einerseits und dem Glas der eigentlichen Lichtwellenleiterfasern andererseits stattfindet. Glas, welches für Lichtleitfasern verwendet wird, hat einen Ausdehnungskoeffizienten von α = 0,04 · 10⁻⁵ bis 0,1 · 10⁻⁵ 1/K, während die für das Coating verwendeten Materialien Ausdehnungskoeffizienten etwa im Bereich α = 5 · 10⁻⁵ bis 30 · 10⁻⁵ 1/K und die für die Schutzhülle SH etwa im Bereich α = 5 · 10⁻⁵ bis 30 · 10⁻⁵ 1/K aufweisen, wobei der erste Wert für -30°C und der letzte für 60°C gilt. Das Temperaturverhalten des Ausdehnungskoeffizienten dieser Kunststoffmaterialien ist außerdem nicht linear.

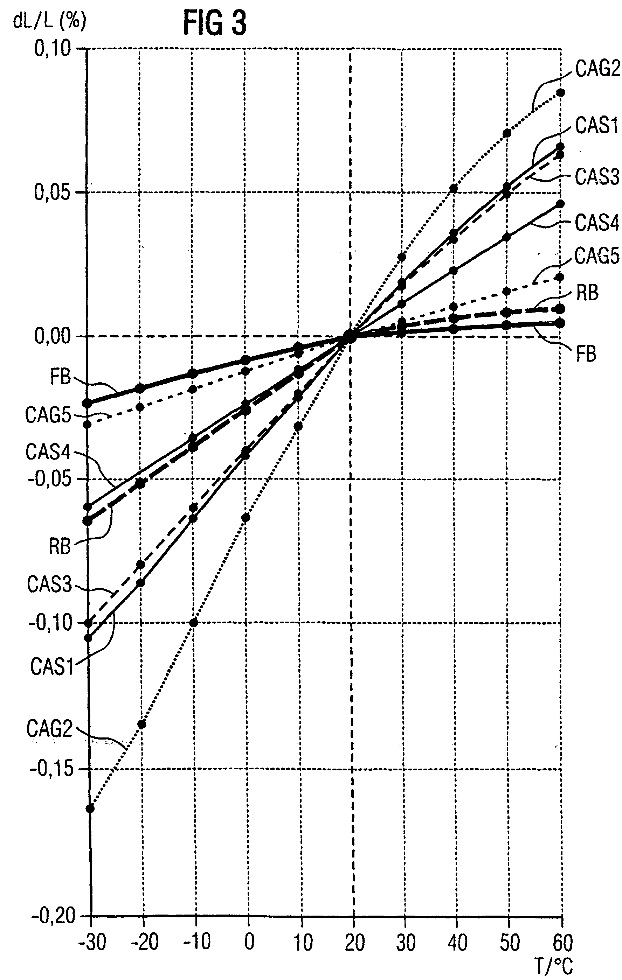

Figur 3 zeigt ebenfalls für den Temperaturbereich T von -30° (als unterer Temperaturgrenzwert des Kabels angenommen) bis + 60° C (als oberer Temperaturgrenzwert des Kabels angenommen) den Temperaturgang beispielhaft für verschiedene Kabelkonstruktionen. Die Kurven zeigen normiert auf 20°C (Raumtempertatur) die Längenänderung dL/L = f(T), wobei inkrementell näherungsweise gilt ΔL/L = ε=αΔT mit α als Temperaturausdehnungskoeffizient und Temperaturschritten von jeweils ΔT = 10° im vorliegenden Beispiel. Der mittlere jeweilige (inkrementelle) Temperaturausdehnungskoeffizient α entspricht somit der Steigung der Dehnungskurve zwischen zwei solchen Ecktemperaturen, so daß gilt α=ε/ΔT.

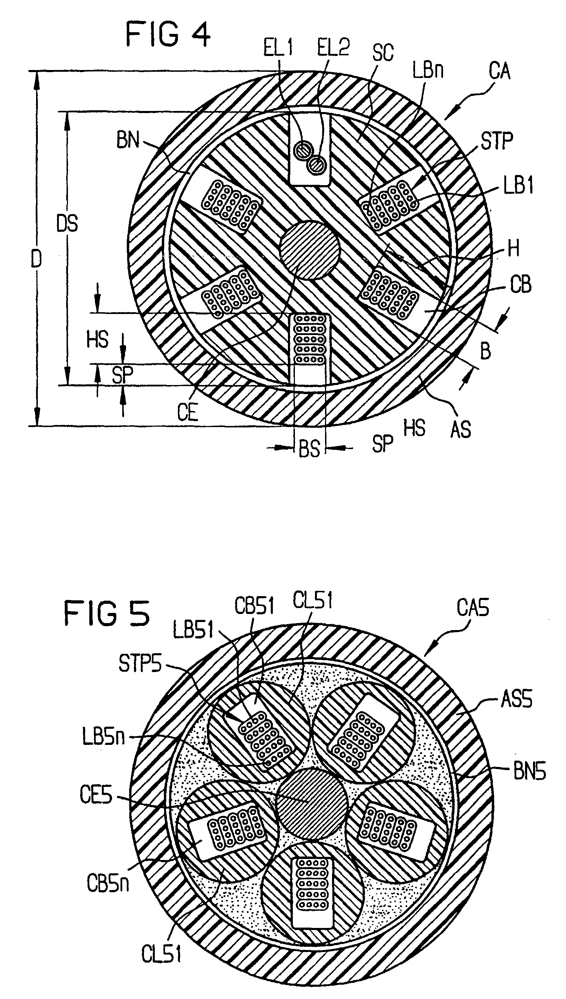

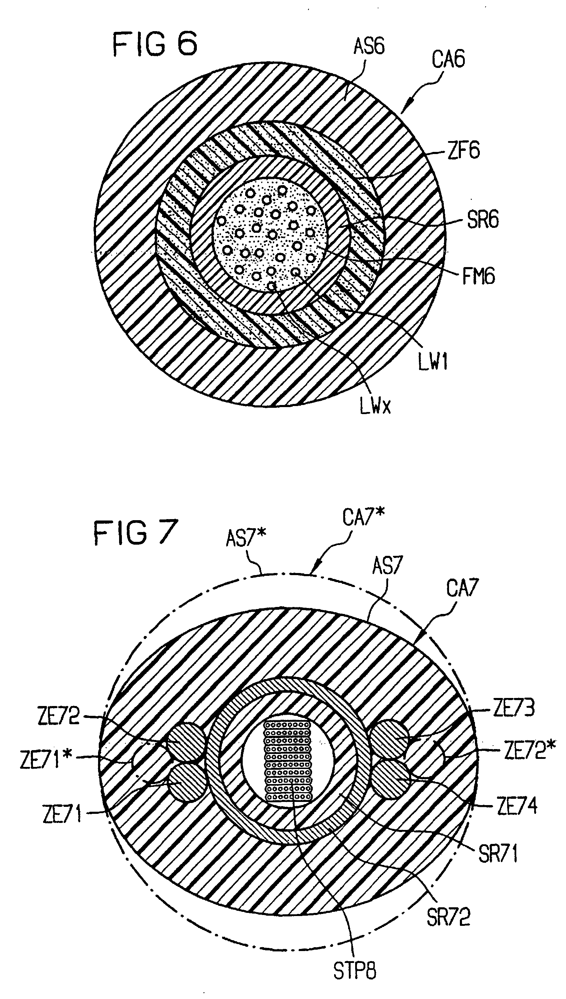

Bei den Kabelkonstruktionen sind zunächst Kammerkabel mit Lichtwellenleiterbändchen vorausgesetzt, wie sie der in Figur 4 dargestellte Querschnitt eines derartigen Kabels CA zeigt. Es können im Rahmen der Erfindung aber auch alle anderen Kabelkonstruktionen verwendet werden, z.B. Hohladerkabel ("loose tube"), Luftkabel, usw., wie beispielhaft anhand der Figuren 6 bis 8 noch erläutert wird.

Das Kabel CA nach Figur 4 weist ein zentrales Zugelement CE zum Beispiel aus Stahldrähten oder aus glasfaserverstärktem Kunststoffmaterial (GFK oder FRP="fiber reinforced plastic") auf, auf welchem fest eine aus Kunststoffmaterial bestehende, mit helixförmig verlaufenden, vorzugsweise rechteckigen, nach außen offenen Nuten oder Kammern CB versehene Zwischenschicht (Kammerkörper) CS folgt. Die offenen Kammern CB werden von einer Bespinnung oder Bewicklung BN, zum Beispiel mittels einer Folie, Quellvlies oder dergleichen verschlossen. Nach außen hin folgt ein vorzugsweise aus Kunststoff, insbesondere PE bestehender Außenmantel AS. In den Kammern CB ist jeweils ein Stapel STP von Lichtwellenleiterbändchen angeordnet, wobei diese in radialer Richtung aufeinander gestapelt sind und bei einer der Kammern mit LB1 bis LBn (im vorliegenden Beispiel ist n = 5 gewählt und die Zahl der Lichtwellenleiter im Bändchen jeweils mit 4 angenommen) bezeichnet sind. Diese Lichtwellenleiterbändchen LB1 bis LBn können bevorzugt den in Figur 2 näher dargestellten Aufbau haben.

Die Lichtwellenleiterbändchen LB1 bis LBn sind beweglich in den Kammern CB angeordnet, das heißt der Querschnitt der Kammern CB (Breite B, Höhe H) ist etwas größer gewählt als die Außenabmessungen (Breite BS, Höhe HS) des Bändchenstapels STP aus den Bändchen LB1 bis LBn. Dadurch sind diese Lichtwellenleiterbändchen zwar in bestimmten Teilbereichen über Reibung an die Wandung bzw. den Boden der Kammer gekoppelt, sonst aber grundsätzlich auch frei beweglich. Die Breite B ist zweckmäßig nur geringfügig größer zu wählen (bevorzugt zwischen 0,2 und 0,4 mm - die Breite ist abhängig vom Biegeradius des Kabels und die angegeben Werte gelten für Biegeradius = 10facher Kabeldurchmesser) als BS, weil hier keine nennenswerten Temperaturprobleme auftreten.

Jedes derartige Kabel hat einen bestimmten Temperaturgang des Temperaturausdehnungskoeffizienten α, wobei α in starkem Maße von den Dimensionen und den verwendeten Materialien bzw. den jeweiligen Materialanteilen an der Gesamtkonstruktion abhängt. Einen besonderen Einfluß auf das Ausdehnungsverhalten haben zugfeste Materialien, z.B. der zugfeste Kern CE, und Kunststoffmaterialien mit größeren Dimensionen wie z.B. das die Kammern CB umgebende Kunststoffmaterial des Kammerkörpers SC sowie der ein oder mehrschichtige Außenmantel AS.

Je größer die Unterschiede in den Ausdehnungskoeffizienten der Kabelstruktur des Kabels CA nach Figur 4 einerseits und der Lichtwellenleiterbändchen LB1 bis LBn andererseits sind, um so größer muß die jeweilige Kammer CB in radialer Richtung (=Kammerhöhe H) dimensioniert werden, damit für den vorgegebenen Betriebstemperaturbereich (meist von - 30°C bis + 60°C) für de Stapel STP aus Lichtwellenleiterbändchen LB1 bis LBn ausreichende Bewegungsmöglichkeiten (Ausweichmöglichkeiten) vorhanden sind, um die Unterschiede in den Ausdehnungskoeffizienten ausgleichen zu können, ohne daß es zu unerwünscht großen Makrobiegungen kommt. Obwohl für die nachfolgenden Überlegungen zunächst ein Kammerkabel zugrundegelegt ist, kann das Prinzip der Erfindung, d.h. die Idee der Angleichung ("Synchronisation") des Temperaturganges auf alle anderen Kabelkonstruktionen angewendet werden.

Als Beispiel wird ein Kammerkabel gemäß Figur 4 mit einer maximalen Faseranzahl von 100 zugrundegelegt. Von den insgesamt sechs Kammern kann eine mit einem isolierten elektrischen Leiterpaar EL1, EL2 (Signalkanal) bestückt sein; es ist auch möglich, daß alle Kammern mit Bändchenstapeln belegt sind oder daß einige leer bleiben bzw. nur teilweise bestückt sind. Das dargestellte Kabel kann bis zu 100 Lichtwellenleiter aufnehmen, weil in jeder der verbleibenden 5 Kammern CB 20 Lichtwellenleiter (5 Bändchen à 4 Lichtwellenleiter) vorgesehen sind.

Für die weiteren Überlegungen im Zusammenhang mit Figur 3 ist für alle Beispiele (ausgenommen Kabel entsprechend Kurve CAS3 mit D = 14 mm bei Figur 3) ein Außendurchmesser D von 15 mm zugrundegelegt. Die Wandstärke des Außenmantels AS (aus PE) liegt bei etwa 1,7 mm, die Lage BN z.B.: aus Quellvlies bei etwa 0,6 mm, der Kammerkörper SC (aus PE) hat einen Außendurchmesser DS von etwa 10,4 mm (ausgenommen CAS3 mit DS = 9,5 mm bei Figur 3) und der im Inneren vorgesehene Kern CE aus zugfestem Material hat einen Außendurchmesser von 2,6 mm. Die nachfolgenden Berechnungen und dargestellten Kurvenverläufe enthalten natürlich gewisse Fehlerwerte zum einen dahingehend, daß sehr genaues Datenmaterial in der Literatur vielfach nicht vorhanden ist und durchgeführte Messungen nur im Rahmen von bestimmten Toleranzwerten erfolgen können. Diese Unschärfen, welche durch entsprechende Toleranzwerte gegeben sind, können zwar die dargestellten bzw. errechneten oder gemessenen Werte in gewissem Umfang verändern; sie liegen jedoch weit unterhalb dem, was an Verbesserungen durch die erfindungsgemäße abgewandelte Dimensionierung der Kabelstruktur erreicht werden kann. Durch experimentelle Versuche ist es (z.B. mittels Prototypen) möglich, die "Synchronisation" des Temperaturganges zu beeinflussen, um daraus die richtigen Querschnitte bzw. Mischungsverhältnisse abzuleiten.

In Figur 3 ist normiert auf 20°C der punktiert dargestellte Kurvenverlauf mit dem größten Temperaturgang der Dehnung dL/L = f(T) eines Kabels mit CAG2 bezeichnet. Das zugehörige Kabel hat ein zugfestes Zentralelement CE von 2,6 mm Durchmesser aus glasfaserverstärktem Kunststoff, wobei das Matrixmaterial aus Vinylesterharz oder Epoxidharz (Anteil ca. 20%) besteht und etwa 80 % der Querschnittsfläche mit Glasfaserfilamenten gefüllt sind. Der Temperaturgang dieses so aufgebauten Kabels CAG2 reicht von etwa -0,16 bei -30° bis 0,09 bei + 60°.

Die ausgezogene Kurve CAS1 unterscheidet sich von der Kabelkonstruktion CAG2 lediglich dadurch, daß das zugfeste Element CE in diesem Fall aus einem Stahldraht von 2,6 mm Durchmesser besteht. Der Temperaturgang der Dehnung dL/L des Kabels CAS1 ist geringer als der des Kabels CAG2, wobei aber beide Kabel in der Tendenz grundsätzlich einen ähnlichen Dehnungsverlauf zeigen. Der Temperaturgang dieses so aufgebauten Kabels CAS1 reicht von etwa -0,10 bei -30° bis 0,07 bei + 60°.

Das Kabel mit dem kurz gestrichelten Kurvenverlauf CAS3 hat ebenfalls einen aus Stahldraht bestehenden Kern von 2,6 mm Durchmesser, wobei jedoch hier ein genuteter Kunststoffkörper SC von geringerem Durchmesser nämlich von etwa DS = 9,5 mm (statt vorher 10,4 mm) vorausgesetzt ist, die Wandstärke des Außenmantels AS beträgt immer noch 1,7 mm wie bei den vorhergehenden Beispielen. Der Temperaturgang dieses so aufgebauten Kabels CAS3 reicht von etwa -0,1 bei -30° bis 0,07 bei + 60°.

Die dick gestrichelte Kurve RB zeigt den Dehnungverlauf für ein Lichtwellenleiterbändchen (RB4 nach Fig. 2). Die dicke ausgezogene Kurve FB zeigt den Verlauf für einen einzelnen beschichteten (Coating) Lichtwellenleiter mit 250 µm Außendurchmesser. Durch die große Differenz im Temperaturverlauf im Bereich unterhalb von 20°C zwischen dem Bändchenverlauf RB und dem Verlauf der Kammerkabel CAG2, CAS1, CAS3 müssen große Kammertiefen H vorgesehen werden, um die Ausgleichsbewegungen bei niederen Temperaturen zu ermöglichen und so Makrokrümmungen zu vermeiden.

Um den Einflußfaktor des Ausdehnungskoeffizienten der Kunststoffmaterialien zu zeigen, wird nun von einem Mehrkomponentensystem (d.h. aus unterschiedlichen Materialien bestehend) ausgegangen mit einem Ausdehnungskoeffizienten von 1 · 10⁻⁵ 1/K für das Kunststoffmaterial (Außenmantel AS, Kunststoffkörper SC des Kabels nach Figur 4 bei sonst gleichen Abmessungen) zugrundegelegt und für ein Kammerkabel mit GFK-Kern CE (Kurve CAG5 in Fig. 3) bzw. mit Stahldraht-Kern CE (Kurve CAS4 in Fig. 3) berechnet. Kern- und Mantelmaterial sind weiterhin mit gleichem E-Modul wie bei den vorherigen Beispielen vorausgesetzt. In der Praxis kann der vorstehend genannte Ausdehnungskoeffizient beispielsweise dadurch realisiert bzw. angenähert werden, daß alle PE-Materialien (Elemente AS und SC in Figur 4) mit LCP gefüllt werden, wobei der prozentuale Anteil des LCP von der zur korrigierenden Längendifferenz abhängt.

Die dick gestrichelte Kurve RB und die Kurve CAS4 laufen unterhalb 20° weitgehend gleich, d.h. es kann mit einer sehr geringen Kammerhöhe H gearbeitet werden, weil die Dehnung des Kabels und die der Lichtwellenleiterbändchen etwa gleich ("synchron") verläuft.

Wird dagegen beispielsweise eine Kabelkonstruktion entsprechend dem Kurvenverlauf CAG2 verwendet, dann muß die sehr starke Schrumpfung dieses Kabels bei -30°C (bis -0,16 %) zwangsläufig zu einer erheblichen Überlänge der Bändchen LB1 bis LBn in den Kammern bei der Struktur nach Figur 4 führen, deren Dehnung (von CAG2) bei -30° C nur etwa -0,06% beträgt, so daß sich dort eine Längendifferenz von -0,16 + 0,06 = -0,1 für die Gesamtkonstruktion ergibt. Die Lichtwellenleiterbändchen LB1 bis LBn werden sich bei niedrigen Temperaturen den Kabeln nach Figur 4 zum Längenausgleich (theoretisch) in einer etwa wellenförmig verlaufenden Linie lagern, um eine größere Länge aufnehmen zu können, da die Knickkräfte nach EULER sehr klein sind für das Bändchen LBn.

Geht man von einer etwa sinusförmigen Wellenlinie aus, welche die Bändchen LB1 und LBn bei dem Kabel nach Figur 4 einnehmen, dann muß der Restspalt SP = H-HS (Leerraum oberhalb des Bändchenstapels bei 20°C) bei einem Kabel entsprechend CAG2 etwa 0,8 mm betragen, wenn keine Stauchkräfte auf die Bändchen LB1 bis LBn ausgeübt werden sollen. Geht man dagegen von einer Kombination entsprechend den Kurven RB einerseits und CAS4 (Figur 3) andererseits aus, dann braucht, um die verbleibende Längendifferenz infolge der unterschiedlichen Dehnungen (-0,06% + 0,055% = -0,005%) aufnehmen zu können, die Spaltbreite SP nur etwa 0,2 mm groß sein. Eine gewisse Restspaltbreite ist im allgemeinen deshalb zweckmäßig, um Toleranzen bei der Fertigung zu kompensieren und ggf. für die Aufnahme bzw. den Ausgleich von Biegespannungen.

Wenn man das Kammerkabel entsprechend Figur 4 nicht mit Lichtwellenleiterbändchen, sondern mit einzelnen Lichtwellenleitern (Lichtwellenleiter mit Coating = Außendurchmesser z.B. 250 µm) bestückt, dann ist eine möglichst starke Annäherung zwischen der den Temperaturgang des Ausdehnungskoeffizienten für einen einzelnen Lichtwellenleiter angebenden Kurve FB und der Kabelkurve vorzusehen. Hierzu ist die Kombination mit einem Kabel CAG5 zweckmäßig, d.h. die Lichtwellenleiter werden in einem Kammerkabel der vorstehend beschriebenen Art (analog zu CAS4) jedoch mit einem Glasfaserkern CE von 2,6 mm Außendurchmesser angeordnet.

Allgemein gilt, daß je geringer im unteren Temperaturbereich die Abweichung der Temperaturverläufe gewählt wird, d.h. je kleiner der Abstand zwischen der Kabeltemperaturkurve einerseits und der Temperaturkurve für die optischen Übertragungselemente (RB, FB) andererseits ist, desto weniger Restspalt muß bei den Kammern CB des Kammerkörpers SC zur Verfügung gestellt werden, um bei niedrigen Temperaturen etwaige Rest-Ausgleichsvorgänge noch zuzulassen.

Im allgemeinen wird die Auslegung somit vorteilhaft so durchgeführt, daß zunächst die Kurve RB (bei Verwendung von Lichtwellenleiterbändchen) bzw. FB (bei Verwendung von einzelnen Lichtwellenleitern) in Abhängigkeit von der Temperatur für den vorgegebenen Temperaturbereich des Kabels z.B. von -30°C bis +60°C durch Rechnung oder Versuch bestimmt wird. Dann wird die Auslegung der zugehörigen Kabelkonstruktion durch Änderung der verschiedenen Parameter (z.B. Ersatz eines Stahlkernes CE durch einen GFK-Kern, Ersatz des Kunststoffmaterials für den Kammerkörper SC durch ein anderes Kunststoffmaterial, Ersatz des Außenmantels AS durch ein anderes Kunststoffmaterial) so variiert, daß der Temperaturverlauf der so erhaltenen Kabelkonstruktion im Bereich zwischen 20°C und dem unteren Grenzwert (z.B. -30°C) möglichst nahe (bei Verwendung von Lichtwellenleiterbändchen) bei dem Temperaturverlauf des Lichtwellenleiterbändchens RB bzw. (bei Verwendung von einzelnen Lichtwellenleitern) bei dem Temperaturverlauf des Lichtwellenleiters FB liegt. Neben den vorstehend beschriebenen Material-Variationen für die verschiedenen Elemente AS, SC und CE oder auch zusätzlich hierzu ist es auch möglich, die Dimensionen dieser Elemente zu verändern, d.h. z.B. den Durchmesser des Kernelemtentes CE größer oder kleiner zu machen, die Wandstärke des Außenmantels AS zu verändern und ggf. auch den Querschnitt des Kammerkörpers zu variieren. Infolge dieser vielfältigen Gestaltungsmöglichkeiten ist es möglich, für das jeweilige optische Übertragungselement, als z.B. für einen vorgegebenen Bändchentemperaturgang (RB) oder einen vorgegebenen Lichtwellenleitertemperaturgang (FB) die zugehörige Kabelstruktur in dem gewünschten Maße hinsichtlich des Temperaturganges zu optimieren.

Es ist zweckmäßig, daß die thermische Schrumpfung des Kabels im Bereich von 20°C bis zum untersten Temperaturwert gemäß der jeweiligen Kabel-Spezifikation (hier bei den Beispielen -30°C) um nicht mehr als ± 30%, bevorzugt nicht mehr als ± 20%, von der thermischen Schrumpfung des verwendeten optischen Übertragungselementes (z.B. Lichtwellenleiters FB oder des Lichtwellenleiterbändchens RB) abweicht. Ein besonders gedrängter Aufbau mit einem kleinen Restspalt läßt sich dann realisieren, wenn die thermische Schrumpfung des Kabels im Bereich von 20°C bis zum untersten Temperaturwert um ≤ ± 10% von der thermischen Schrumpfung des verwendeten optischen Übertragungselementes abweicht. Besonders bei günstiger Materialauswahl und exakter Abstimmung läßt sich ein sehr kompakter Kabelaufbau auch dahingehend realisieren, daß die Abweichung der thermischen Schrumpfung des Kabels von der des optischen Übertragungselementes ≤ ± 5% beträgt. Bei optimaler Ausnützung aller möglichen Parameter sind sogar Abweichungen ≤ ± 2% realisierbar.

Die Auslegung des Temperaturganges des Kabels CA einerseits bezogen auf den Temperaturgang der optischen Übertragungselemente (z.B. der Lichtwellenleiter LW bzw. der Bändchen RB) andererseits sollte also so erfolgen, daß diese Abweichung möglichst gering gehalten wird und zwar bei Temperaturen unter 20°. Es kann auch zweckmäßig sein, diese Abweichung auf Temperaturen unter 10° und insbesondere auch unter 0°C zu beziehen.

Wie sich aus Figur 3 ergibt, kann die ausreichend gute Annäherung zwischen der Kabelkonstruktion z.B. CAG5 einerseits und dem zugehörigen optischen Übertragungselement z.B. FB andererseits auch in einer absoluten Größe ausgedrückt werden. So sollte zweckmäßig bei dem unteren Temperatur-Grenzwert des Kabels gemäß Kabel-Spezifikation (im vorliegenden Beispiel unterste Temperatur -30°C) die Abweichung zwischen dem prozentualen dL/L Wert des Temperaturganges des optischen Übertragungselementes (z.B. FB) einerseits und dem prozentualen dL/L Wert einer zugehörigen Kabelkonstruktion (z.B. CAG5) andererseits so gewählt wird, daß die Differenz der zugehörigen dL/L-Werte unter ± 0,03 Prozentpunkte liegt, wobei bevorzugt Werte von unter ± 0,02 Prozentpunkte eingesetzt werden, weil hierfür dann sehr kleine Restspaltbreiten erforderlich sind. Bei einer sehr sorgfältigen Auslegung der Kabelkonstruktion im Bezug auf das zugehörige optische Übertragungselement sind auch Unterschiede von ± 0,01 Prozentpunkte in den Werten dL/L realisierbar. Beispielsweise unterscheiden sich das Kabel gemäß Kurve CAS4 und die Lichtwellenleiterbändchen gemäß Kurve RB nach Figur 3 nur um weniger als 0,01 Prozentpunkte (=vorteilhafte Kombination), während gegenüber einzelnen Lichtwellenleitern (FB) dieses Kabel um etwa 0,035 Prozentpunkte (=unvorteilhafte Kombination) abweicht.

Ein kleiner Restspalt etwa im Bereich zwischen 0,1 mm und 0,4 mm bei den Kammern CB ist auch deswegen zweckmäßig um Bewegungsvorgänge in eng begrenzten Bereichen zuzulassen, wie sie bei Biegungen des Kabels zum Beispiel beim Einziehen in Rohre oder dergleichen oder beim Auf trommeln auf eine Kabeltrommel vorkommen können. Auch hierbei findet, wegen der Reibungs-Verbindung zwischen den Lichtwellenleiterbändchen LB1 bis LBn einerseits und der Wandung des genuteten Kunststoffkörpers SC andererseits kein vollständiger Bewegungsausgleich statt, obwohl der Kurvenverlauf der Kammern CB helixförmig ist, weil die Reibung dieser Bewegungsvorgänge nur lokal zuläßt. Der Gleitreibungskoeffizient schwankt zwischen 0,2 und 0,7 je nach Materialpaarung des Kabeldesigns. Aufgrund der Reibkoeffizienten und der geringen Knickkräfte nach EULER erführt das Lichtwellenleiterbändchen durch die Kabelhülle nur sehr geringe Stauchkräfte. Im allgemeinen ist es nicht erforderlich, daß die Lichtwellenleiterbändchen bei der Kabelstruktur nach Figur 4 keinerlei Stauchungen erfahren. Sehr kleine Stauchkräfte haben kaum eine Bedeutung, da es um Instabilitäten geht und die Knickkraft klein ist.

Die Lichtwellenleiter bzw. Lichtwellenleiterbändchen werden im allgemeinen bei Raumtemperatur unter einer meist geringen Vorspannung so eingelegt, daß sie gerade am Boden der jeweiligen Kammer CB aufliegen. Wegen des aus Figur 3 ersichtlichen Dehnungsverhaltens kommt es, da bei zunehmender Temperatur sich das Kabel entsprechend den Kurven CAG2 bis CAG5 stärker dehnt als der Lichtwellenleiter entsprechend der Kurve FB/RB, zu einer Zunahme der Zugspannung. Diese ist in einem gewissen für die jeweiligen Lichtleitfasern jeweils bekannten Bereich unschädlich.

Die Auslegung erfolgt weiterhin generell, d.h. unabhängig von der konkreten Kabelkonstruktion, vorteilhaft so, daß bei den höheren Temperaturen, d.h. im oberen Temperatur-Grenzbereich (z.B. 60°C gemäß Kabel-Spezifikation) die auf die Lichtwellenleiter infolge der Temperaturerhöhung ausgeübte Dehnung nicht über einen vorgegebenen Grenzwert, vorteilhaft nicht über 0,1%, und insbesondere nicht über 0,05%, ansteigt. Im allgemeinen kann davon ausgegangen werden, daß eine temperaturbedingte Dehnung im obersten Temperaturbereich, das heißt bei der höchsten Temperatur gemäß Kabel-Spezifikation (z.B. von 60°C) von 0,1% (aufgrund einer Temperaturbelastung) noch ohne Auswirkungen auf die Lebensdauer (aufgrund der dann vernachlässigbaren Bruchwahrscheinlichkeit) der optischen Übertragungselemente bleibt und auch für die optischen Übertragungselemente noch keine unerwünschte Dämpfungserhöhung der Lichtleitfasern ergibt. Bei kurzfristigen Einwirkungen (z.B. beim Verlegen) werden vielfach bestimmte Dehnungsgrenzwerte gemäß Kabel-Spezifikation (z.B. durch Zugspannungen) für die Lichtleitfasern zugelassen, die im allgemeinen bis 0,3% oder 0,2% reichen. In diese Grenzwerte sollte die temperaturbedingte Dehnung, wenn sie bei der Verlegung auftreten kann, mit eingerechnet werden, also z.B. temperaturbedingte Dehnung 0,1% + Dehnung durch Zugkräfte bei der Verlegung 0,2% ergibt eine Gesamtdehnung von 0,3% (im ungünstigsten Fall).

Je näher der Kurvenverlauf für die Lichtwellenleiter/-bändchen FB/RB und der für das Kabel (wie zum Beispiel im Fall der Kabelkonstruktion entsprechend CAG5) beieinander liegen, desto geringer ist auch der Anstieg welcher die Dehnungsbeanspruchung bei den Lichtwellenleiter/Lichtwellenleiterbändchen erfährt. Im allgemeinen ist eine Kurvenabweichung im oberen Bereich, d.h. bei den höheren Temperaturen weniger kritisch, weil geringe Zugkräfte in dem erwähnten Toleranzbereich von den Lichtwellenleitern ohne weiteres aufgenommen werden können, ohne daß es zu einer Erhöhung der Übertragungsdämpfung kommt. Dagegen ist der Bereich bei niedrigeren Temperaturen infolge der nicht genau definierten etwa auftretenden Makrobiegungen und der dadurch verursachten Makrobiegungsdämpfung im allgemeinen meist kritischer. Es ist deshalb zweckmäßig, wenn der Kurvenverlauf zwischen der Kabelkonstruktion einerseits und den Lichtwellenleitern/Lichtwellenleiterbändchen andererseits im tiefen Temperaturbereich, das heißt unter 20°C, insbesondere unter 10°C und vorzugsweise unter 0°C stärker einander angenähert wird, wie dies in Figur 3 bei den Kurvenverläufen FB einerseits und CAG5 andererseits (oder RB und CAS4) gegeben ist.

Die Anwendung der Erfindung ist nicht auf die in Figur 4 dargestellte Kabelkonstruktion eines sogenannten Kammerkabels beschränkt. Die Erfindung kann vielmehr allgemein dort Anwendung finden, wo Temperaturfenster eingeplant werden aufgrund unterschiedlicher thermischer Ausdehnungskoeffizienten. Beispielsweise kann eine Konstruktion entsprechend Figur 5 vorgesehen sein, wo eine Anzahl von n Verseilelementen CL51 bis CL5n auf einem zugfesten Kern CE5 aufgeseilt sind, beispielsweise in der Art der sog. "loose tube"- oder Hohladerkonstruktionen. Die einzelnen etwa rohrförmigen Verseilelemente haben im Innern rechteckförmige oder runde Kammern CB51 bis CB5n, in denen Lichtwellenleiterbändchen LB51 bis LB5n in der im Zusammenhang mit Figur 4 erläuterten Weise in Form eines Stapels untergebracht sind. Auch hier muß, um Ausdehnungsvorgänge im Rahmen des für das Kabel vorgesehenen Temperaturbereichs durchführen zu können, ein entsprechender Spalt vorgesehen sein, d.h. die Höhe des Bändchenstapels STP5 ist geringer zu wählen, als die Höhe der jeweiligen Kammeröffnung. Die Auswahl einer vorteilhaften Zuordnung zwischen den Ausdehnungskoeffizienten des bzw. der Lichtwellenleiter/oder der Lichtwellenleiterbändchen einerseits und der Kabelkonstruktion andererseits erfolgt analog zu den im Zusammenhang mit Figur 3 erläuterten Überlegungen, d.h. die Bändchendehnung und die Gesamtdehnung der Kabelkonstruktion werden soweit aneinander angenähert, daß im Bereich unterhalb von 20°C, vorzugsweise unterhalb von 10°C und insbesondere unterhalb von 0°C die Differenz der relativen Dehnung zwischen der Kabelkonstruktion einerseits und den Lichtwellenleitern bzw. Lichtwellenleiterbändchen andererseits kleiner gehalten wird als 30%, vorzugsweise unter 20% und insbesondere unter 10%.

In Figur 6 ist ein optisches Kabel CA6 dargestellt, welches einen Außenmantel AS6 aus Kunststoffmaterial, eine zugfeste Zwischenschicht ZF6, ein Innenrohr SR6 aus Kunststoff und darin angeordnete einzelne Lichtwellenleiter LW1 bis LWx enthält, wobei diese zweckmäßig in eine weiche Füllmasse FM6 eingebettet sind.

Geht man von einer üblichen (bekannten) Kabelkonstruktion aus, dann hat das dargestellte Kabel folgenden Aufbau:
Außendurchmesser des Kabels CA6: 11,0 mm
Wandstärke AS6: 2,5 mm, Material PE
Wandstärke ZF6: 1,6 mm, Material GFK-Rohr extrudiert
Wandstärke SR6: 0,55 mm, Material PC/PBT oder PBT

Das dargestellte Kabel hat bei der vorstehend beschriebenen Auslegung bei -30°C analog zu Figur 3 eine relative Längenänderung dL/L von -0,08 %. Es liegt also in einer größeren Entfernung von der Kurve FB, welche für einzelne Lichtwellenleiter (wie in Figur 6 dargestellt) gilt und einen Wert dL/L von etwa 0,02% bei -30°C hat. Bei +60° ergibt sich ein Wert von dL/L von + 0,05% für ein Kabel gemäß Figur 6.

Es besteht im Rahmen der Erfindung eine erste Möglichkeit einer "Synchronisation" dahingehend, daß die Lichtwellenleiter von 0,25 auf 0,35 mm aufgedickt werden (durch ein zusätzliches Acrylatcoating). Derartige Fasern haben dann ein dL/L von etwa- 0,059% bei - 30°C und von + 0,017 bei + 60°C.

Verwendet man anstelle der Einzellichtwellenleiter bei Figur 6 Bändchen, dann ergibt sich ebenfalls eine gewisse "Synchronisation", weil deren dL/L bei -30°C bei etwa -0,063% und bei +60°C bei etwa 0,01 liegt (vgl. Fig. 3).

Um das Temperaturverhalten eines Kabels analog Figur 6 zu verbessern, können im Rahmen der Erfindung beispielsweise auch Abwandlungen des eigentlichen Kabelaufbaus vorgenommen werden, wobei die Abmessungen gegenüber dem vorher beschriebenen Ausführungsbeispiel zunächst unverändert gelassen werden:

Statt 12 Einzelfasern werden 3 Stück 4er Bändchen verwendet. Der Außenmantel AS6 besteht aus 80% PE + 20% LCP ("liquid cristall polymer" - Angaben hier und nachfolgend jeweils in Gew%). Die Dehnung dL/L bei -30°C liegt für das Kabel bei etwa - 0,06%.

Mit geänderten Abmessungen kann ebenfalls gearbeitet werden. So kann eine Reduktion der Wandstärke des Außenmantels AS6 von 2,5 mm auf 1,5 mm (ergibt Kabeldurchmesser = 9 mm) erfolgen, was ein dL/L (-30°C) von etwa -0,06% ergibt und bei +60°C ein dL/L von 0,038% .

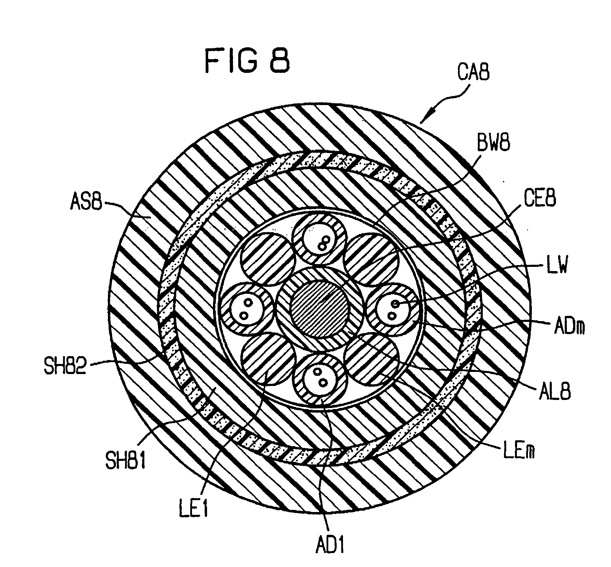

In Figur 7 ist ein teilweise strichpunktiert dargestelltes, übliches Kabel CA7* mit einem Außendurchmesser von etwa 13,9 mm gezeichnet, dessen Außenmantel AS7* kreisrund ist und eine gleichmäßige Wandstärke von 3 mm aufweist und aus PE besteht. In diesen Außenmantel sind, ebenfalls strichpunktiert dargestellt etwa mittig zwei diametral gegenüberliegende, zugfeste Elemente ZE71* und ZE72* eingebracht, die in einer Querschnittsebene liegen, einen Außendurchmesser von 1,5 mm aufweisen und aus Stahldraht bestehen. Nach innen folgen ein Stahlrillenmantel SR72 und eine aus Kunststoffmaterial (insbesondere PBT oder PC/PBT) bestehendes Innenrohr SR71. Im Inneren des Rohres SR71 ist eine Stapel STP7 von Lichtwellenleiterbändchen angeordnet, der ggf. in eine Füllmasse FM7 eingebettet sein kann. Ein derartiges Kabel CA7* hat bei -30°C analog Figur 3 einen dL/L Wert von - 0,09% und liegt also im größeren Abstand zu der für optische Übertragungselemente in Bändchenform zuständigen Kurve RB.

In Figur 7 ist mit ausgezogenen Linien ein gemäß der Erfindung optimiertes optisches Kabel CA7 dargestellt, das einen ovalen Außenmantel AS7 aufweist. Nach innen folgt wiederum der Stahlrillenmantel SR72 und das aus Kunststoffmaterial (insbesondere PBT oder PC/PBT) bestehende Innenrohr SR71. Im Inneren des Rohres SR71 ist weiterhin der Stapel STP7 von Lichtwellenleiterbändchen angeordnet, der ggf. in die Füllmasse FM7 eingebettet sein kann.

Das Kabel CA7 der in Figur 7 mit ausgezogenen Linien dargestellten Struktur ist im Sinne der Lehre der Erfindung optimiert. Hierzu sind eine Reihe von Änderungen gegenüber dem ursprünglichen Zustand CA7* durchgeführt:

Anstelle von PE wird für den Außenmantel AS7 ein MDPE verwendet, das einen Anteil von 10% LCP enthält. Der Außenmantel AS7 ist elliptisch geformt mit Ellipsenachsen von 13 und 11 mm, wobei die Ellipsenachse 13 mm dort liegt, wo die zugfesten Elemente angeordnet sind. Durch die Änderungen der Außenkontur des Kabels CA7 ergibt sich eine Einsparung an Mantelmaterial etwa in der Größenordnung von 30%. Weiterhin verringert sich der Einfluß des Mantelmaterials auf das Gesamtverhalten des Kabels wegen des geringeren Materialanteils. LCP hat einen Ausdehnungskoeffizienten α von - 0,03 10⁻⁴ 1/K und einen E-Modul von 20 000 N/mm². Durch den LCP-Anteil wird der thermische Ausdehnungskoeffizient des Kunststoffmantels entsprechend reduziert.

Eine weitere Änderung wird dahingehend durchgeführt, daß anstelle jeweils eines einzelnen zugfesten Elementes ZE71*, ZE72* auf jeder Seite ein Paar von zugfesten Elementen ZE71, ZE72 bzw. ZE73 und ZE74 beiderseits symmetrisch zu der großen Ellipsenachse angeordnet werden. Sie sind auch etwas weiter nach innen gerückt und liegen praktisch unmittelbar auf dem Stahlrohrwellmantel SR72 auf. Der Durchmesser jedes einzelnen dieser zugfesten Elemente ist hier zu 1,5 mm gewählt, wobei die Elemente aus GFK bestehen. Der Durchmesser der zugfesten Elemente kann ggf. bis zu 1,8 mm vergrößert werden, um eine weitere Feinsychronisation zu erzielen. Das Innenrohr SR71 mit einem Außendurchmesser von 6 mm und einem Innendurchmesser von 4,4 mm (wie bei CA7*) enthält ebenfalls einen LCP-Anteil und zwar in der Größenordnung von etwa 20%, während der Rest von 80% aus PBT besteht.

Um die Längsdichtigkeit des Kabels sowohl in der Ausführungsform CA7* als auch in der Ausführungsform CA7 zu gewährleisten, kann im Bereich der zugfesten Elemente CE71* und CE72* bzw. CE71 bis CE74 ein quellfähiges Material z.B. in Form eines Quellfadens vorgesehen sein.

Das Kabel CA7* mit dem üblichen Aufbau hat bei -30°C analog Figur 3 eine relative Dehnung dL/L von etwa -0,09% und liegt damit relativ weit von der den Temperaturgang der Lichtwellenleiterbändchen wiedergebenden Kurve RB mit einem dL/L von etwa -0,06% entfernt. Nimmt man dagegen die Optimierung vor, wie sie das Kabel AS7 nach Figur 7 zeigt, dann erhält man bei -30°C einen Wert von dL/L von etwa -0,07%, der relativ nahe bei dem Wert von RB von etwa -0,06% liegt. Hier sind zu einem Stapel STP8 zusammengefaßt 10 Lichtwellenleiterbändchen vorgesehen mit je 8 Lichtwellenleitern und einer Außenabmessung von 2,1 0,31 mm. Der Einfluß (gegenüber einem Viererbändchen) auf die Dehnungskurve ist aber, wie Figur 1 zeigt, gering. Die Bändchen des Stapels STP8 können in geeigneter Weise, z.B. mittels einer Haltewendel o.dgl. zusammengehalten werden.

In Figur 8 ist ein optisches Kabel CA8 dargestellt, das einen Außenmantel AS8 aufweist. Im Inneren sind zwei rohrförmige Schutzhüllen SH82 und SH81 vorgesehen, wobei SH82 aus zugfesten, vorzugsweise in ein Matrixmaterial eingebetteten Aramid- und/oder Glasfasern besteht und SH81 ein aus Kunststoffmaterial bestehendes Schutzrohr darstellt. Im Inneren des Schutzrohres SH81 ist ein zugfestes Kernelement CE8 vorgesehen, das durch eine Kunststoffauflage AL8 auf einen gewünschten Außendurchmesser aufgedickt ist. Auf dieses so aufgedickte zugfeste Element CE8/AL8 sind mehrere Lichtwellenleiteradern AD1 - ADm aufgeseilt, wobei im vorliegenden Beispiel zusätzliche Blindelemente LE1 - LEm vorgesehen sind. Es ist aber natürlich auch möglich, den gesamten Raum mit Lichtwellenleiteradern vollständig zu beseilen. Die Blindelemente LE1 - LEm bestehen-zweckmäßig aus wenig zugfesten Kunststoffmaterialien, wie z.B. PE, PBT. Jede der Lichtwellenleiteradern AD1 -ADm enthält vorzugsweise in eine Füllmasse eingebettet einen oder mehrere Lichtwellenleiter LW ("Hohlader" - "loose tube").

Geht man davon aus, daß das optische Kabel CA8 entsprechend Figur 8 einen herkömmlichen Aufbau zeigt, dann hat es einen Außendurchmesser von 16,25 mm und die einzelnen Elemente zeigen folgende Struktur:

| | |
|---|---|
| Wandstärke AS8: 2,4 mm, Material | PE |
| Wandstärke SH82: 0,55 mm, Material | Aramidfasern und Glasgarne |
| Wandstärke SH81: 1 mm, Material | PE |
| Wandstärke BW8: 0,3 mm, Material | Kraft-Krepp-Papier |
| Außendurchmesser (Umhüllende) der Adern AD1 - ADm) | 7,7 mm |
| Außendurchmesser LE1- LEm | 2,0 mm, Material PE |
| Außendurchmesser AD1 - ADm | 2,0 mm, Material d. Außenwand: PBT oder PC/PBT |
| Wandstärke AL8: 0,75 mm, Material | PE |
| Außendurchmesser CE8 | 2,1 mm, Material GFK |

Die relative Dehnung dL/L für dieses Kabel entsprechend Figur 3 ergibt sich bei -30°C zu etwa -0,31%.

Ändert man nun den vorstehend beschriebenen Aufbau im Sinne der Lehre der Erfindung, wird zuerst der stark schrumpfende Kunststoffanteil reduziert, d.h. ein Außendurchmesser von nur 14,4 mm vorgesehen und die einzelnen Elemente zeigen folgende Struktur:

| | |
|---|---|
| Wandstärke AS8: 2,4 mm, Material | 80% PE und 20% LCP |
| Wandstärke SH82 | 0 mm, d.h. entfällt |
| Wandstärke SH81: 1,55 mm, Material | GFK-Rohr mit E= 40 000 N/mm² und α = 0,6 · 10⁻⁵ l/K |
| Wandstärke BW8: 0,3 mm, Material | Kraft-Krepp-Papier |
| Außendurchmesser (Umhüllende) der Adern AD1 - ADm) | 7,7 mm |
| Außendurchmesser LE1- LEm | 2,0 mm, Material PE |
| Außendurchmesser AD1 - ADm | 2,0 mm, Material d. Außenwand: PBT oder PC/PBT |
| Wandstärke AL8: 0,75 mm, Material | PE |
| Außendurchmesser CE8 | 2,1 mm, Material GFK |

Die relative Dehnung dL/L analog Figur 3 ergibt sich für dieses Kabel bei -30°C zu etwa -0,044% und liegt damit viel näher bei der Kurve FB in Figur 3. Anstelle des oder zusätzlich zum LCP Anteil können beim Außenmantel AS8 auch Glasanteile dem PE zugemischt werden, so daß max. 70 % PE-Anteil übrigbleibt, d.h. z.B. 20% LCP, 10% Glasanteil, 70% PE.

Um die "Synchronisation" zur Faser noch besser zu gewährleisten, können die einzelnen Lichtwellenleiter LW von 0,25 mm auf einen Gesamtdurchmesser von 0,3 mm mit Acrylat aufgedickt werden, was ein dL/L bei -30°C von - 0,038% ergibt, das sehr nahe bei dem Kabelwert von -0,044% liegt. Allgemein ausgedrückt kann also (zusätzlich zu der vorstehend geschilderten Lösungsmöglichkeiten oder auch unabhängig hiervon) auch so verfahren werden, daß der/die Lichtwellenleiter durch mechanisch fest mit ihm/ihnen verbundene Kunststoffzusätze derart aufgedickt ist/sind, z.B. durch dickeres oder mehrfaches Coating oder einen sonstigen stärkeren oder mehrfachen Materialauftrag (z.B. bei Lichtwellenleiterbändchen nach Figur 2), daß bei niedrigen Temperaturen eine möglichst weitgehende Anpassung (Annäherung) der Dehnung dL/L beim unteren Temperaturgrenzwert in Bezug auf die Dehnung der eigentlichen Kabelkonstruktion erreicht wird. Die Materialauswahl und/oder die Materialstärke kann also auch im Bereich der optischen Übertragungselemente selbst zur Erzielung der "Synchronisation" mit herangezogen werden.

Bei der Erfindung werden somit Polymere (Mantelmaterial und/oder Adermaterial) bezüglich des thermischen Ausdehnungskoeffizienten so verändert, daß beim unteren Temperaturgrenzwert der gewünschte dL/L Wert erreicht wird. Die Art und Menge etwaiger Füllstoffe ist weiterhin dafür verantwortlich, in welchem Maß der E-Modul des Ausgangsstoffes verändert wird, d.h. über die Art und Menge des Füllstoffs sind weitere Eigenschaften des Kabels einstellbar (z.B. Erhöhung von Zug und Querdruckeigenschaften bei gleichzeitiger Reduzierung der Biegbarkeit). So können z.B. 0 - 50% Füllstoffe, aus Glas-, und/oder Kohle-, und/oder Mineralpartikeln vorgesehen sein, die in Form von Fasern, Kugeln oder irregulären Gebilden, alleine oder in Kombination angeordnet werden können. Nachfolgend sind Beispiel von Werkstoffen vor und nach dem Einbringen von Füllstoffen angegeben:
AW = 1 → Mantelkomponente
AW = 2 → Aderkomponente
AW = 3 → Füllstoff
POM = Polyoxymethylenacetal
PA = Polyamid
PC = Polycarbonat
PBT = Polybutenterephthalat

Die α-Werte (nachfolgend angegeben bei 23°C - in erster Näherung kann dieser Wert für den Bereich von Raumtemperatur bis + 80 °C als linearer thermischer Wärmeausdehnungskoeffizient verwendet werden) wurden im, bei tieferen Temperaturen sind kleinere Werte zu erwarten.

| AW | Polymere Aramid | Füllstoff | Anteil Füll stoff in Gew% | α (Polymere) ·10⁻⁵ 1/K | α (gefül ltes Polymere) ·10⁻⁵ 1/K | E-Modul (gefül ltes Polymere) N/mm² | E-Modul nur vom Polymere |
|---|---|---|---|---|---|---|---|
| 1,2 | PA6 | Glasfaser | 50 | 10 | 1..1,5 | 10000 | 3000 |
| 2 | PC/PBT | Glasfaser | 30 | 9 | 3 | 7100 | 2000 |
| 2 | POM | Glasfaser | 40 | 11 | 1 | 14000 | 3000 |
| 2 | POM | Glaskugeln | 10 | 11 | 1,1 | 3100 | 3000 |
| 2 | PAI | Kohlefaser | 30 | 3 | 0,9 | 22300 | 4900 |
| 3 | LCP | Glasfaser | 30 | -0,3 | -0,1 | 16000 | 10400 |

## Patentansprüche

1. Lichtwellenleiterkabel (CA) mit mindestens einem zugfesten Element (CE) sowie einem Kabelmantel (AS) und mit mindestens einem mindestens einen Lichtwellenleiter enthaltenden optischen Übertragungselement (LB1 - LBn), das beweglich in einer Kammer (CB) untergebracht ist, deren Abmessungen geringfügig größer gewählt sind als die Außenabmessungen des optischen Übertragungselementes (LB1 - LBn),
**dadurch gekennzeichnet,**
**daß** jeweilige Querschnitte und Material-Mischungsverhältnisse von Kabelkomponenten der Kabelkonstruktion des Lichtwellenleiterkabels derart konstruiert sind, daß sich für die Kabelkonstruktion und das verwendete optische Übertragungselement jeweils mehrere inkrementelle Temperaturausdehnungskoeffizienten αᵢ innerhalb eines jeweiligen Temperaturschritts ΔT ergeben, die der Bedingung genügen, daß in einem Temperaturbereich von 20°C bis -30°C eine thermische Schrumpfung dL/L der Kabelkonstruktion um nicht mehr als 30% von einer thermischen Schrumpfung dL/L des verwendeten optischen Übertragungselementes (LB1 - LBn) abweicht, wobei jeweils dL/L = Summe (αᵢ·ΔT) mit ΔT = 10°C.

2. Lichtwellenleiterkabel nach Anspruch 1
**dadurch gekennzeichnet,**
**daß** die Kammerabmessungen derart bemessen sind, daß sich aus einer zusätzlichen Überlänge des optischen Übertragungselementes (LB1 - LBn) bei -30°C ergebende lokale Biegeradien größer als 70 mm sind.

3. Lichtwellenleiterkabel nach einem der vorhergehenden Ansprüche,
**dadurch gekennzeichnet,**
**daß** das Lichtwellenleiterkabel derart konstruiert ist, daß im oberen Temperaturbereich, insbesondere oberhalb von 20°C, auf das optische Übertragungselement (LB1 - LBn) durch die Kabelkonstruktion eine temperaturbedingte Zugspannung ausgeübt wird.

4. Lichtwellenleiterkabel nach Anspruch 3,
**dadurch gekennzeichnet,**
**daß** das Lichtwellenleiterkabel derart konstruiert ist, daß bei 60°C in Folge der Zugspannung das optische Übertragungselement (LB1 - LBn) nicht mehr als 0,1% gedehnt wird.

5. Lichtwellenleiterkabel nach einem der vorhergehenden Ansprüche,
**dadurch gekennzeichnet,**
**daß** das Kabel mehrere, insbesondere helixförmig verlaufende, Kammern aufweist, und daß in diese Kammern optische Übertragungselemente (LB1 - LBn) eingelegt sind.

6. Lichtwellenleiterkabel nach einem der vorhergehenden Ansprüche,
**dadurch gekennzeichnet,**
**daß** mehrere einzelne rohrförmige Verseilelemente vorgesehen sind, die in ihrem Inneren jeweils eine Kammer zur Aufnahme optischen Übertragungselementes (LB1 - LBn) aufweisen.

7. Lichtwellenleiterkabel nach einem der vorhergehenden Ansprüche,
**dadurch gekennzeichnet,**
**daß** im Zentrum ein rohrförmiges Element vorgesehen ist, das in seinem Inneren eine Kammer zur Aufnahme des optischen Übertragungselementes (LB1 - LBn) aufweist (Fig. 6, Fig. 7).

8. Lichtwellenleiterkabel nach einem der vorhergehenden Ansprüche,
**dadurch gekennzeichnet,**
**daß** das optische Übertragungselement (LB1 - LBn) durch Zusammenfassung mehrerer Lichtwellenleiter (LW) zu einem Lichtwellenleiterbändchen gebildet ist, von denen eines oder mehrere in dem Kabel angeordnet sind.

9. Lichtwellenleiterkabel nach einem der Ansprüche 1 bis 7,
**dadurch gekennzeichnet,**
**daß** das optische Übertragungselement durch einen einzelnen Lichtwellenleiter gebildet ist, wobei einer oder mehrere in dem Kabel angeordnet sind.

10. Lichtwellenleiterkabel nach einem der vorhergehenden Ansprüche,
**dadurch gekennzeichnet,**
**daß** für die Kabelkonstruktion Kunststoffe aus oder mit Zusätzen von PMMA, oder LCP oder Glasanteilen verwendet sind.

11. Lichtwellenleiterkabel nach einem der vorhergehenden Ansprüche,
**dadurch gekennzeichnet,**
**daß** der Lichtwellenleiter oder das optische Übertragungselement (LB1 - LBn) durch mechanisch fest mit ihm verbundene Kunststoffzusätze derart aufgedickt ist, insbesondere durch ein zusätzliches Coating oder einen sonstigen Materialauftrag, daß eine, vorzugsweise geringfügige (z.B. max. 0,05%), weitergehende Anpassung in der Dehnung (dL/L) des optischen Übertragungselements in Bezug auf die Dehnung der Kabelkonstruktion erreicht ist.

12. Lichtwellenleiterkabel nach einem der vorhergehenden Ansprüche,
**dadurch gekennzeichnet,**
**daß** unterhalb von 20°C, insbesondere bei -30°C, die Abweichung der thermischen Schrumpfung (dL/L) des optischen Übertragungselementes von der thermischen Schrumpfung (dL/L) der Kabelkonstruktion (CAG5) kleiner oder gleich ± 5% beträgt.

## Claims

1. Optical-fibre cable (CA) with at least one tension element (CE) and a cable sheath (AS) and with at least one optical transmission element (LB1 - LBn) which contains at least one optical fibre and is movably housed in a chamber (CB), the dimensions of which are chosen to be slightly larger than the outer dimensions of the optical transmission element (LB1 - LBn), **characterized in that** respective cross sections and material mixing ratios of cable components of the cable construction of the optical-fibre cable are designed so as to produce in each case for the cable construction and the optical transmission element used a number of incremental coefficients of thermal expansion αᵢ within a respective temperature step ΔT which satisfy the condition that, in a temperature range from 20°C to -30°C, a thermal shrinkage dL/L of the cable construction deviates by no more than 30% from a thermal shrinkage dL/L of the optical transmission element (LB1 - LBn) used, with in each case dL/L = sum of (αᵢ·ΔT) where ΔT = 10°C.

2. Optical-fibre cable according to Claim 1, **characterized in that** the chamber dimensions are set in such a way that local bending radii produced by an additional excess length of the optical transmission element (LB1 - LBn) at -30°C are greater than 70 mm.

3. Optical-fibre cable according to one of the preceding claims, **characterized in that** the optical-fibre cable is designed in such a way that, in the upper temperature range, in particular above 20°C, a temperature-induced tensile stress is exerted on the optical transmission element (LB1 - LBn) by the cable construction.

4. Optical-fibre cable according to Claim 3, **characterized in that** the optical-fibre cable is designed in such a way that, at 60°C, the optical transmission element (LB1 - LBn) is extended by no more than 0.1% as a result of the tensile stress.

5. Optical-fibre cable according to one of the preceding claims, **characterized in that** the cable has a number of chambers, in particular helically running chambers, and **in that** optical transmission elements (LB1 - LBn) are laid in these chambers.

6. Optical-fibre cable according to one of the preceding claims, **characterized in that** a number of individual tubular stranding elements are provided, which respectively have in their interior a chamber for receiving optical transmission elements (LB1 - LBn).

7. Optical-fibre cable according to one of the preceding claims, **characterized in that** provided in the centre is a tubular element which has in its interior a chamber for receiving the optical transmission element (LB1 - LBn) (Figure 6, Figure 7).

8. Optical-fibre cable according to one of the preceding claims, **characterized in that** the optical transmission element (LB1 - LBn) is formed by combining a number of optical fibres (LW) to form an optical-fibre ribbon, one or more of which are arranged in the cable.

9. Optical-fibre cable according to one of Claims 1 to 7, **characterized in that** the optical transmission element is formed by a single optical fibre, one or more being arranged in the cable.

10. Optical-fibre cable according to one of the preceding claims, **characterized in that** plastics of or with additions of PMMA, or LCP or glass components are used for the cable construction.

11. Optical-fibre cable according to one of the preceding claims, **characterized in that** the optical fibre or the optical transmission element (LB1 - LBn) is thickened by additions of plastic securely connected to it mechanically, in particular by an additional coating or some other application of material, in such a way that a further adaptation in the extension (dL/L) of the optical transmission element, preferably a slight adaptation (for example max. 0.05%), is achieved with respect to the extension of the cable construction.

12. Optical-fibre cable according to one of the preceding claims, **characterized in that**, below 20°C, in particular at -30°C, the deviation of the thermal shrinkage (dL/L) of the optical transmission element from the thermal shrinkage (dL/L) of the cable construction (CAGS) is less than or equal to ± 5%.

## Revendications

1. Câble (CA) de guide d'ondes de lumière, comprenant au moins un élément (CE) résistant à la traction ainsi qu'une gaine (AS) de câble et au moins un élément (LB1 à LBn) optique de transmission comportant un guide d'ondes de lumière qui est logé mobile dans une chambre (CB), dont les dimensions sont choisies légèrement plus grandes que les dimensions extérieures de l'élément (LB1 à LBn) optique de transmission,
**caractérisé**
**en ce que** les sections transversales et rapports de mélange de matière respectifs des éléments de la construction du câble de guide d'ondes de lumière sont tels que l'on a, pour la construction de câble et l'élément optique de transmission, utilisé respectivement plusieurs coefficients α₁ incrémentiels de dilatation en fonction de la température dans un stade ΔT respectif de température qui satisfont à la condition que, dans une plage de température de 20°C à -30°C, un retrait dL/L thermique de la construction de câble ne s'écarte pas de plus de 30 % d'un retrait dL/L thermique que l'élément (LB1 à LBn) optique de transmission utilisé, chaque dL/L = somme (αᵢ· ΔT) avec ΔT = 10°C.

2. Câble de guide d'ondes optiques suivant la revendication 1,
**caractérisé en ce que** les dimensions de la chambre sont telles que des rayons locaux de courbure provenant à -30°C d'une surlongueur supplémentaire de l'élément (LB1 à LBn) optique de transmission sont plus grands que 70 mm.

3. Câble de guide d'ondes optiques suivant l'une des revendications précédentes,
**caractérisé en ce que** le câble de guide d'ondes optiques est construit de façon à ce que, dans la plage supérieure de température, notamment au-dessus de 20°C, il est appliqué à l'élément (LB1 à LBn) optique de transmission par la construction de cadres une tension qui dépend de la température.

4. Câble de guide d'ondes optiques suivant la revendication 3,
**caractérisé en ce que** le câble de guide d'ondes optiques est tel qu'à 60°C l'élément (LB1 à LBn) optique de transmission est étiré en raison de la tension de pas plus de 0,1 %.

5. Câble de guide d'ondes optiques suivant l'une des revendications précédentes,
**caractérisé en ce que** le câble a plusieurs chambres s'étendant notamment en forme d'hélice et ce qu'il est mis dans ces chambres des éléments (LB1 à LBn) optiques de transmission.

6. Câble de guide d'ondes optiques suivant l'une des revendications précédentes,
**caractérisé en ce qu'**il est prévu plusieurs éléments tubulaires de câblage qui ont à l'intérieur respectivement une chambre de réception d'éléments (LB1 à LBn) optiques de transmission.

7. Câble de guide d'ondes optiques suivant l'une des revendications précédentes,
**caractérisé en ce qu'**il est prévu au centre un élément tubulaire qui a à l'intérieur une chambre de réception de l'élément (LB1 à LBn) optique de transmission (figure 6, figure 7).

8. Câble de guide d'ondes optiques suivant l'une des revendications précédentes,
**caractérisé en ce que** l'élément (LB1 à LBn) optique de transmission est formé par réunion de plusieurs guides d'ondes (LW) de lumière en une bandelette de guides d'ondes de lumière, dont l'un ou plusieurs d'entre eux sont disposés dans le câble.

9. Câble de guide d'ondes optiques suivant l'une des revendications 1 à 7,
**caractérisé en ce que** l'élément optique de transmission est formé par un guide d'ondes de lumière dont l'un ou plusieurs d'entre eux sont disposés dans le câble.

10. Câble de guide d'ondes optiques suivant l'une des revendications précédentes,
**caractérisé en ce que** pour la construction de câble sont utilisées des matières plastiques en ou avec des additions de PMMA ou de LCP ou de parties de verre.

11. Câble de guide d'ondes optiques suivant l'une des revendications précédentes,
**caractérisé en ce que** le guide d'ondes de lumière ou l'élément (LB1 à LBn) optique de transmission est rendu plus épais par des additifs de matière plastique reliés à lui d'une manière fixe mécaniquement, notamment par un coating supplémentaire ou par un autre dépôt de matière de façon à obtenir une bonne adaptation, de préférence petite (par exemple au maximum de 0,05 %), de l'allongement (dL/L) de l'élément optique de transmission par rapport à l'allongement de la construction de câble.

12. Câble de guide d'ondes optiques suivant l'une des revendications précédentes,
**caractérisé en ce que** en-dessous de 20°C, notamment à -30°C, l'écart du retrait (dL/L) thermique de l'élément optique de transmission au retrait (dL/L) thermique de la construction (CAG5) de câble est inférieur ou égal à ± 5 %.
